# EUROPEAN PATENT APPLICATION

(11) **EP 1 411 717 A2**
(43) Date of publication of application: **21.04.2004**
(21) Application number: 03256368.6
(22) Date of filing: 09.10.2003
(51) Int. Cl.: H04N 5/225

(54) **Camera apparatus**

(30) Priority: 09.10.2002 KR 2002061573; 08.01.2003 KR 2003001151; 21.04.2003 US 464094 P
(71) Applicant: SAMSUNG ELECTRONICS CO., LTD., Suwon-City, Kyungki-do (KR)
(72) Inventor: Lee, Chang-Hee, Paldal-gu, Suwon-city Gyunggi-do (KR); Park, Bum-cheol, Jangan-gu, Suwon-city Gyunggi-do (KR); Kim, Nam-il, Suwon-City Gyunggi-do (KR); Moon, Tae-won, Paldal-gu, Suwon-City Gyunggi-do (KR)
(74) Representative: Geary, Stuart Lloyd

(57) **Abstract**

Camera apparatus comprises: a body, on which a tape cassette is removably mounted; a camera unit installed in the body and provided with a plurality of camera sections, wherein the camera sections have different pixel numbers and the camera sections are independently driven; a mode sensing unit for sensing the photographic mode corresponding to the one selected among the camera sections; a control unit for selecting a photographic mode according to a signal transferred from the mode sensing unit and for driving a camera unit corresponding to the selected photographic mode; and a display unit provided in the body for showing the image photographed by the one selected among the camera sections.

## Description

The present invention relates to camera apparatus comprising a main body for receiving a removable tape storage medium; display means; and a camera unit included with the main body.

In general, a digital stills camera converts images incident through a lens into digital signals and stores the digital signals on a recording medium such as hard disc or memory card. Therefore, it is possible to directly input digital images into a computer without using a scanner or similar. Because digital still cameras are highly compatible with personal computers (PCs), it is simple and convenient to perform editing and correction, and to transmit images. However, such cameras do not tend to be used for recording moving images because of the limited size of the recording media, and also because of the absence of sound recording and reproduction capability.

Camcorders, or video cameras, typically use cassette tapes as recording media, allowing an hour or more of moving images to be recorded. In addition, camcorders tend to be provided with a microphone device and a speaker device. However, because the image quality of camcorders is poorer than that of digital still cameras, they are mainly used in photographing moving images. Furthermore, because those camcorders generally have many functions and have a complicated construction compared to digital still cameras, the camcorders tend to be relatively bulky and expensive.

To have the capability of still and video digital cameras, it is necessary to purchase two devices, with the requisite cost and inconvenience associated with that.

The present invention is characterised:
in that the camera unit is provided with a plurality of independently driven camera modules having different pixel numbers;
by mode sensing means for sensing a photographic mode corresponding to a selected camera module;
by control means responsive to the mode sensing means for driving the camera module corresponding to the sensed photographic mode; and
in that the display means is arranged to display an image photographed by the driven camera module.

Typically, one camera module relates to a digital still camera for photographing still images; and a second camera module is used as a digital video camera for capturing moving images, the still camera having a higher pixel count.

Example embodiments of the present invention will now be described, by way of example only, with reference to the accompanying drawings, in which:
Figure 1 is a perspective view of a camera apparatus according to the invention;
Figure 2 is a block diagram for illustrating the electronic components of the camera apparatus according to the invention;
Figure 3 is a bottom view of the camera shown in Figure 1;
Figure 4 is a schematic cross-sectional view of the camera apparatus shown in Figure 1;
Figure 5 is a side view of the camera apparatus shown in Figure 1;
Figure 6 is a perspective view of the Figure 1 camera apparatus;
Figures 7 and 8 are perspective views of the Figure 6 camera apparatus, in which the LCD panel is opened;
Figure 9 is a schematic perspective view illustrating a selector switch by way of an example of mode sensing means shown in Figure 2;
Figure 10 is a view schematically showing the state in which a first camera section is turned ON by the selector switch shown in Figure 9;
Figure 11 is a side view illustrating a state in which still images are photographed by using the camera apparatus according to the invention;
Figure 12 is a side view illustrating a state in which moving images are photographed by using the camera apparatus according to the invention;
Figure 13 is a view schematically showing the state in which the second camera section is turned ON by the selector switch shown in Figure 9;
Figure 14 is a perspective view of camera apparatus according to another embodiment of the invention;
Figure 15 is a right side view of the camera apparatus shown in Figure 14;
Figure 16 is a bottom view of the camera apparatus shown in Figure 14;
Figures 17 and 18 are perspective views illustrating operation states of the camera apparatus according to another embodiment of the invention;
Figure 19 is a left side view of the camera apparatus shown in Figure 14;
Figure 20 is a left side view in which the housing is rotated 180° from the state of Figure 19; and
Figure 21 is a cross-sectional view taken along line I-I of Figure 19.

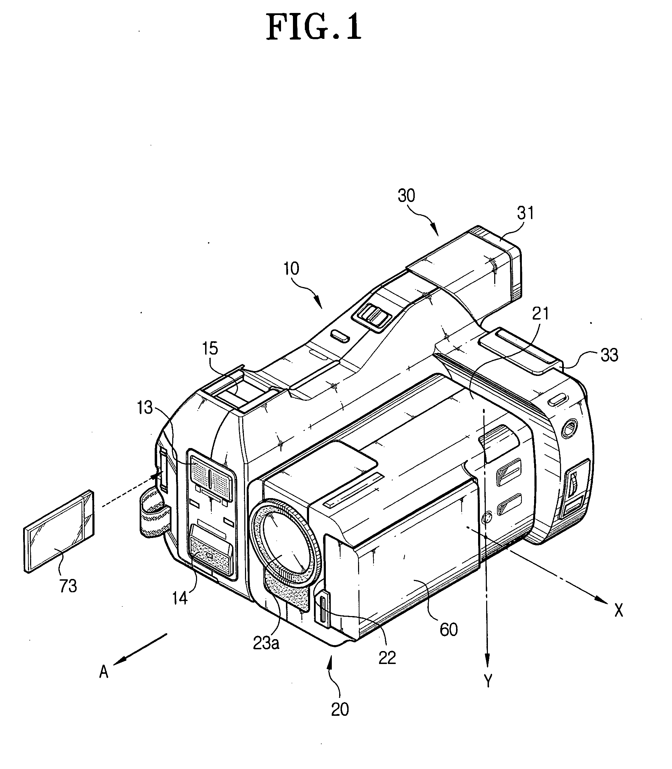

Referring to Figures 1 to 5, a first embodied camera apparatus has the functions of a digital still camera and a camcorder. The camera apparatus comprises a main body 10, a camera unit 20 connected to the main body 10, a display means 30 provided in the main body 10, mode sensing means 40 and control means 50.

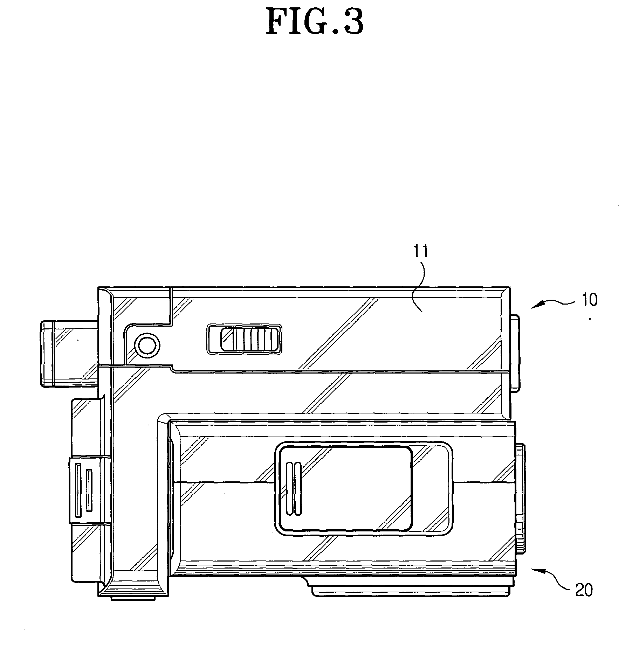

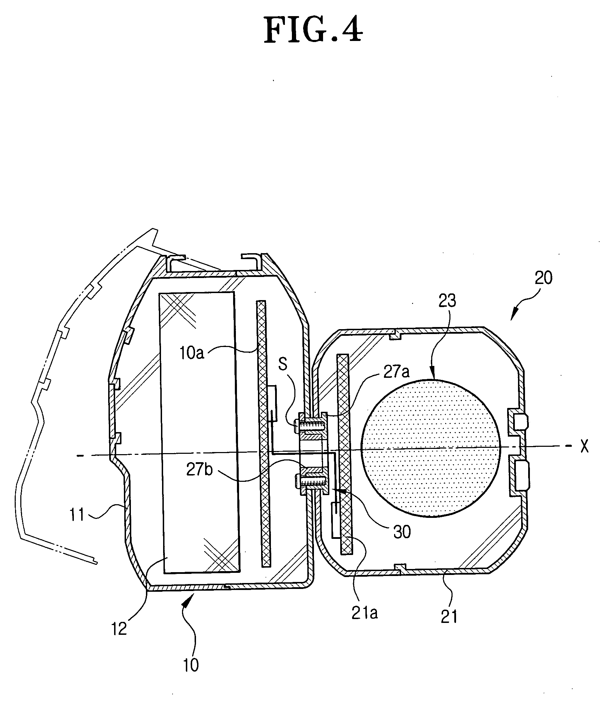

The main body has a "L" shape as shown in top plan view. The inside of the main body 10 is provided with a moving deck into which a cassette tape is removably installed to record moving images. That is, a deck door 11 is provided in the bottom side of the main body 10 to be capable of opening and shutting, as shown in Figure 3, and the cassette tape is installed in the moving deck through the deck door 11. As shown by phantom lines in Figure 4, the deck door 11 allows the tape cassette to be installed in the moving deck when the lower side of the main body 10 is opened. The technical ideas applied to the deck door 11 and the moving deck 12 are conventional and thus detailed description thereof is omitted. One end of the main body 10, i.e., the rear end of the main body 10 disposed in a photography direction is provided with a speaker unit 13 for outputting reproduced sounds and a microphone unit 14 for capturing external sounds. An accessory mount section 15 is provided on the top surface of the body for mounting an accessory such as flash (not shown).

The camera unit 20 comprises a housing 21 movably mounted on the body, and a plurality of camera sections, which have different pixel numbers. The housing 21 is rotatably connected to the main body 10 via a hinge section 27, as shown in Figure 4. The housing 21 is rotatable over an angle of at least 180° and returnable to its origin about the rotational axis. The housing 21 is also provided with a battery mount section 22, in which a battery 60 is removably installed. The battery can be mounted in the battery mount section 22 from an end of the housing 21 in a sliding manner.

The camera sections comprise a first camera section 23 used for a digital still camera and a second camera section 25 used for a digital video camera for picking up images including moving images. The pixel count of the second camera section 25 is less than that of the first camera section 23.

The first camera section 23 comprises: a first lens 23a for the digital still camera; a first CCD 23b for the digital still camera, the CCD 23b converting still images picked up through the first lens 23a into electric signals; and a first driver 23c for driving the first CCD 23b. The first driver 23c is controlled by the control means 50. Specifically, if the mode is determined to be on in which it is required to photograph still images, the control means 50 controls the first driver 23c so that the first CCD 23b is driven. The first camera section 23 is the same as that found in conventional digital still cameras and thus detailed description thereof is omitted.

The second camera section 25 comprises: a second lens 25a for the digital video camera; a second CCD 25b for the digital video camera, the CCD 25b converting images picked up through the second lens 25a into electric signals; and a second driver 25c for driving the second CCD 25b, under control of the control means 50. In the moving image photographic mode, the control means 50 controls the second driver 25c so that the second CCD 25b is driven. The second camera section 25 has a construction like that of conventional digital video cameras and thus detailed description thereof is omitted.

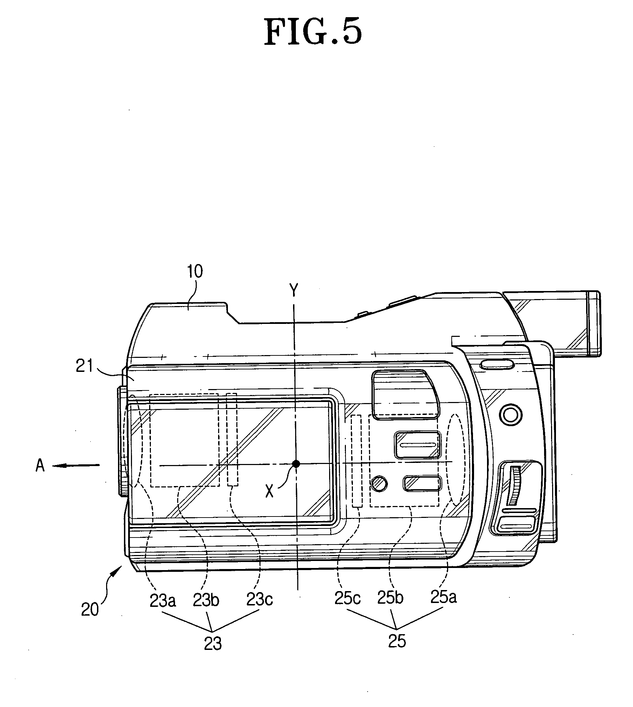

The camera sections 23, 25 are positioned on a common line in the housing 21, with image capture directions being oppositely oriented. Therefore, if the lens 23a of the first camera section 23 is installed to be exposed from one end of the housing 21 as shown in Figure 1, the lens 25b of the second camera section 25 is installed to be exposed from the other end of the housing 21. As shown in Figure 5, the first camera section 23 and the second camera section 25 are symmetrically located about the rotational axis X of the housing in relation to the main body 10. Accordingly, if the housing is rotated over 180°, their positions are changed with respect to each other. If between the camera sections 23, 25 it is determined that the photography mode corresponds to that of the camera 23, by sensing that the housing 21 is aligned with the lens 23a directed in the photographing direction A, the first camera unit 23 is driven and the other camera unit 25 is maintained in the OFF state. If it is determined that the photography mode corresponds to that of the camera 25, by sensing that the housing 21 is aligned with the lens 25a directed in the photographing direction A, the second camera unit 25 is driven and the other camera unit 23 is maintained in the OFF state.

A hinge section 27 connects the housing 21 rotatably in relation to the main body 10. The hinge 27 comprises: a first hollow shaft 27a rotatably installed in the housing 21, and a second hollow shaft 27b rotatably installed in the main body 10 and engaged with the first hollow shaft 27a. The first shaft 27a is inserted into a hole formed in the side surface of the housing 21 facing the main body 10. The first shaft 27a has a flange larger than the hole of the housing 21 and the flange is positioned inside of the housing 21. Therefore, the first shaft 27a cannot be extracted from the housing 21 through the hole. The second shaft 27b is inserted into a hole formed in the main body 10. The second shaft 27b also has a flange larger than the hole of the main body 10 and the flange is positioned inside of the main body 10. The first and second shafts 27a, 27b are interconnected by a screw S. Therefore, the main body 10 and the housing 21 are connected to be rotatable relative to each other by the connection of the shafts 27a, 27b. Furthermore, because the shafts 27a, 27b are hollow in their central parts, cables for signal transfer, electric power supply, etc between the main body 10 and the housing 21 can pass therebetween, through the empty spaces within the shafts. If a main circuit board 10a is provided within the main body 10 and a sub circuit board 21a is provided within the housing 21, it is possible to connect directly these boards with a signal cable such as FPC. In this case, the signal cable can be freely deformed and restored to its origin at least within the rotation range of the housing, thereby enabling signal transfer.

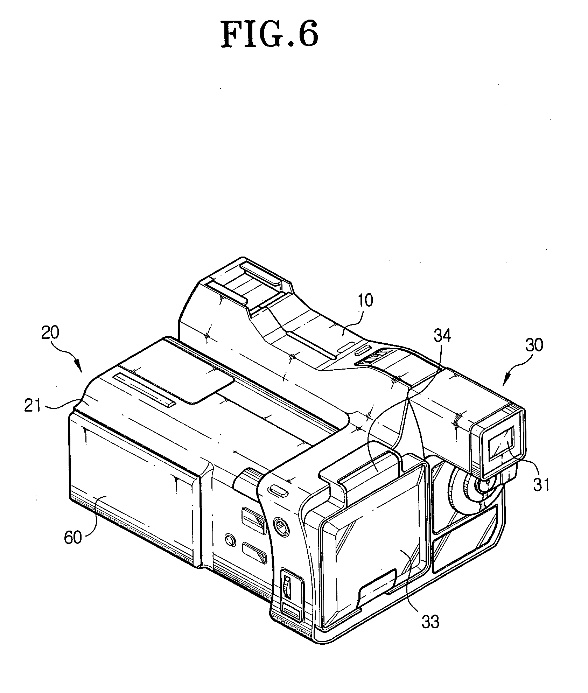

The display means 30 comprises a viewfinder 31 provided in the main body 10, to display images picked up via the camera sections 23, 25, and an LCD panel 33 provided in the main body 10 as shown in Figure 6. The viewfinder 31 is conventional and thus detailed description thereof is omitted.

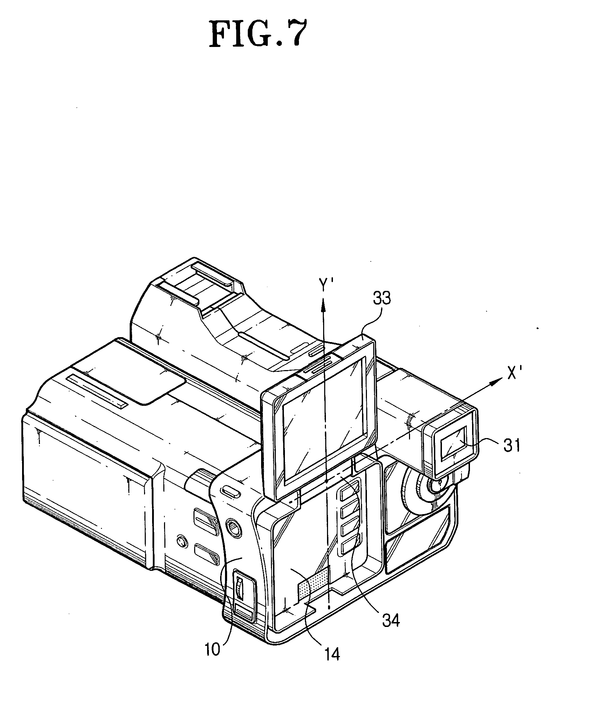

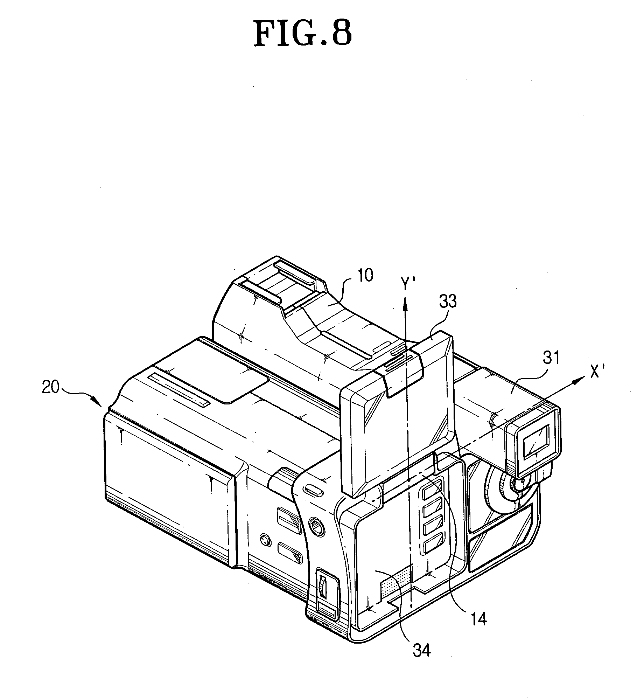

The LCD panel 33 is seated on a seating section formed in the front face of the main body 10 as shown in Figure 7. And, the LCD panel 33 is rotatably connected, for example, to the upper end of a seating section 14 by a joint 34, thereby allowing the seating section 14 to be opened and closed. And, the joint 34 supports the LCD panel 33 so that the LCD panel are rotatable about two axes X', Y'. Therefore, the LCD panel 33 is rotatable about Y' axis from the opened state as indicated in Figure 7, whereby the LCD panel 33 can adopt a position as shown in Figure 8. In this case, the user can view the incident scene on the LCD panel 33 while photographing him or herself. It is also possible for a subject on the opposite side of the camera to the viewfinder 31 to view the incident scene on the LCD panel 33 while the photographer views the scene through the viewfinder 31.

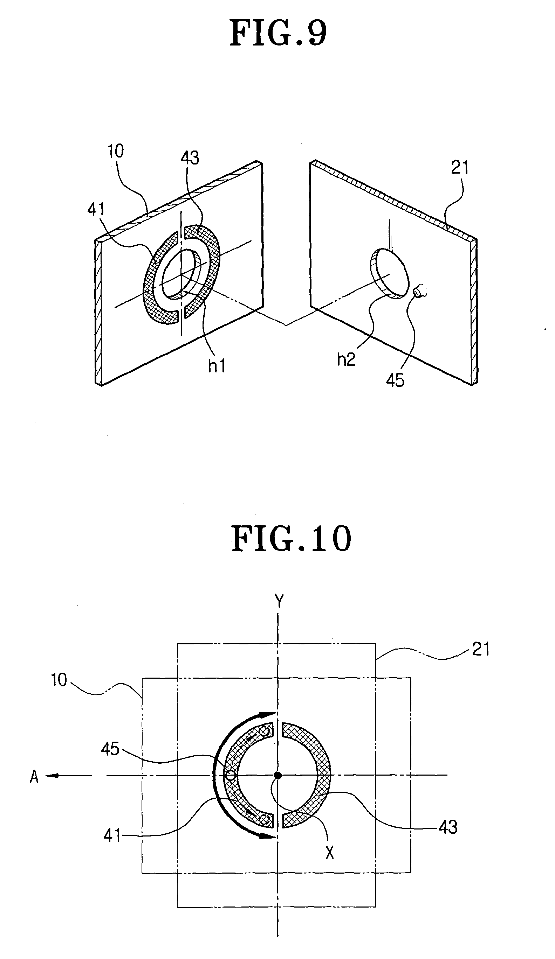

The mode sensing means 40 is provided to sense which of the camera sections 23, 25 is forward facing, and consequently to sense the photographic mode thereof. That is, the mode sensing means 40 senses a photographic mode corresponding to one of the first and second camera sections 23, 25 according to the rotational angle of the camera unit 20 in relation to the main body 10. The camera sections 23, 25 are symmetrically located to maintain an angle of 180° between them as described above. The mode sensing means 40 senses each of the photographic modes on the basis of about 180° rotation. The mode sensing means 40 preferably includes a selector switch that results in the turning ON of one of the camera sections 23, 15 and the turning OFF of the other. For example, the selector switch may comprise first and second contact patterns 41, 43 provided on the main body 10 and a contact terminal 45 provided on the housing 21 to be connected one of the contact patterns 41, 43, as shown in Figure 9. In the above construction, the main body 10 and the housing 21 are connected to be relatively rotatable with each other opposite to holes h1, h2, respectively. Therefore, the contact terminal 45 comes into contact with the first contact pattern 41 or the second contact pattern 43 depending on the rotation angle of the housing 21. Here, it can be assumed that the first contact pattern 41 is connected to the first camera section 23 and the second contact pattern 43 is connected to the second camera section 25. As such, if the contact terminal 45 is positioned to come into contact with the first contact pattern 41, the first camera section 23 is turned to the ON state and the second camera section 25 is turned to the OFF state, as shown in Figure 10, whereby the control section 50 determines the photographic mode to be that of still images, corresponding to the first camera section 23. The first and second contact patterns 41, 43 each are provided to be capable of contacting the contact terminal 45 over an angle of about 180°. Therefore, one of the first and second camera sections 23 and 25 is capable of being driven for substantially all of the possible rotation angles between the housing 21 and the main body. As shown in Figure 10, the camera unit 23, 25 positioned on the left side of the Y-axis is capable of being driven all around the angle included in that position. Therefore, the first and second camera sections 23, 25 are changed in ON/OFF with reference to the Y-axis by the selector switch.

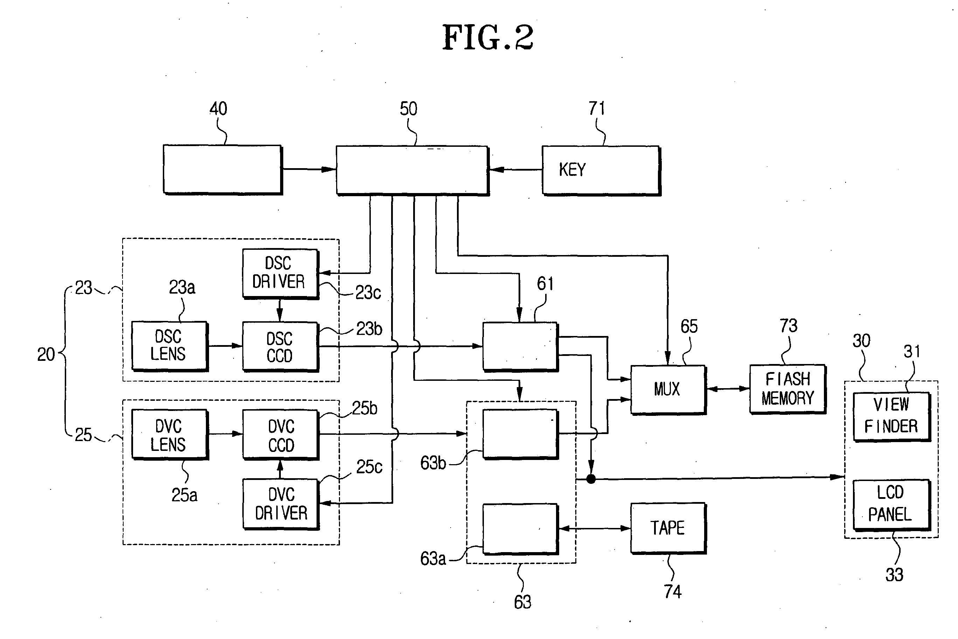

Referring again to Figure 2, the control section 50 selects a photographic mode according to a signal provided by the mode sensing means, i.e., the selector switch operating as described above, and drives the camera unit 23, 25 corresponding to the selected photographic mode. The control means 50 is set with control data entered via a key input section 71. The control means 50 selectively drives a first image processing section 61 that processes signals transferred from the first camera section 23, or alternatively a second image processing section 63 that processes signals transferred from the second camera section 25, according to the selected photographic mode. In particular, the first image processing section 61 compresses and stores one or more still images photographed by the first camera section 23 in a flash memory 73, and then processes them into signals capable of being displayed through the display means 30. In addition, the second image processing section 63 is subdivided into moving images processing section 63a that processes moving images photographed by the second camera section 25 and still images processing section 63b that processes still images photographed by the second camera section 25. The moving image processing section 63a processes and stores data relating to moving images in the tape 74, and also compressively processes the moving images into signals capable of being displayed through the display means 30. Furthermore, the still image processing section 63b stores inputted still image signals in the flash memory 73 and compressively processes the still image signals into signals capable of being displayed.

Meanwhile, the signals processed in each of the image processing sections 61, 63 are handled by a MUX 65 and stored in the flash memory 73. The MUX 65 is controlled by the control means 50 to select the signals transferred from the camera unit 23, 25 corresponding to the selected photographic mode.

The operation of the camera will now be described in detail.

Firstly, a power switch provided on any of the main body 10 and the housing 21 of Figure 1 is turned ON. Then, the mode sensing means 40, i.e. the selector switch, turns ON one of the first and second cameras 23, 25 and turns OFF the other depending on the position of the housing 21 relative to the main body 10. For example, in the state shown in Figure 5, the first camera section 23 is oriented toward the photographing direction A and thus is turned ON, and the second camera section 25 is turned OFF. The information regarding ON/OFF states of these camera sections 23, 25 is transferred from the selector switch to the control means 50. The control section 50 selects the still image photographic mode corresponding to the first camera section 23, i.e., the digital still camera mode as the mode to be played according to the transferred information.

If a command to capture an image is inputted via the key input section 71 from the above-described state, the control means 50 controls the first driver 23c to drive the first CCD 23b. Then, the still image picked up through the first lens 23a is converted into electric signals in the first CCD 23b. The converted electric signals are compressed into an appropriate form for storage in the flash memory 73 by the still image processing section 61. The processed still image signals are stored on the flash memory 73 via the MUX and displayed through the viewfinder 31 or the LCD panel 33 in real time. The digital signals compressed by the selected operation of the key input section 71 can additionally be transferred to a PC through a USB port or stored in an auxiliary memory unit.

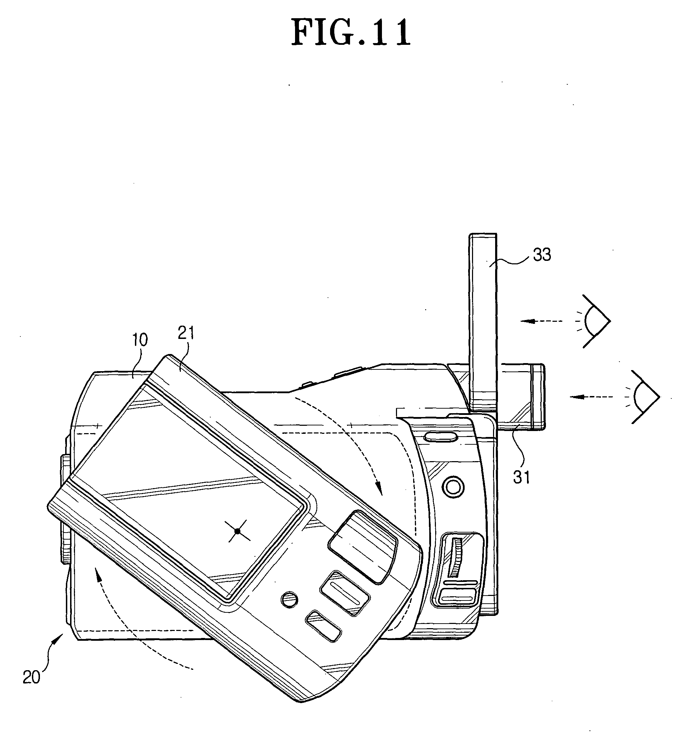

The first camera section 23 remains in the ON state even if the camera unit 20 is additionally rotated by less than 90 degrees in relation to the main body 10, as shown in Figure 11. Therefore, the user can also photograph in a upward or downward tilted angle from the direction in which the main body 10 is facing while viewing photographed images through the viewfinder 31 or the LCD panel. As described with reference to Figure 10, because the first camera section 23 remains in the ON state within a 180° range, it is possible to photograph while rotating the housing 21 within that range.

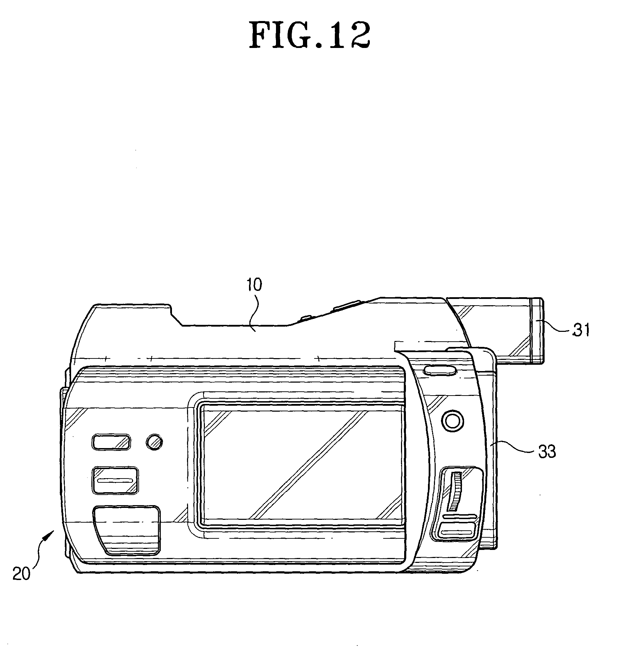

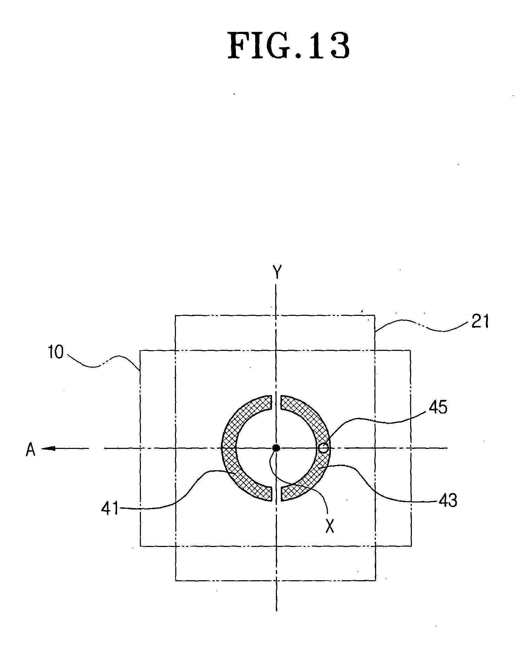

Meanwhile, if the user wishes to capture moving, the user the camera unit 20 from the state shown in Figure 1 to the state shown in Figure 12. Then, as shown in Figure 13, the contact terminal 45 comes into contact with the second contact pattern 43. Therefore, the second camera section 25 is turned into the ON state and the camera unit 23 is turned into the OFF state. The control means 50 turns over the photographing modes and thus selects the moving image photographic mode corresponding to the second camera section 25 accordingly.

In the moving camera mode, if a photograph command is entered via the key input section, the control means controls the second driver 25c to drive the second CCD 25b. Then, the moving images picked up through the second lens 25a are converted into electric signals in the second CCD 25b. The converted electric signals are compressively processed into a form suitable to be stored on the tape 74 by the moving image processing section 63a. The compressively processed video signals are recorded in the tape 74 and displayed through the viewfinder 31 and the LCD panel 33 in real time. Of course, the recorded video signals can be reproduced again, and they can be transported to a PC through a USB port.

In addition, it is possible to capture still images using the second (video) camera section 25. In this case, a still image photographed by the second camera section 25 is transferred to the still image processing section 63b of the second image processing section 63 and then compressively processed into a form suitable to be stored on the flash memory 73.

The camera apparatus incorporates two camera sections, one capable of capturing still images and one capable of capturing still images and moving images, as one unit provided in the body of the apparatus. A photographable mode is selected according to the rotation state of the camera unit 20, and the camera section 23, 25 corresponding to the photographable mode is then driven, so that moving images or still images can be photographed as required. Therefore, it is possible to unite a digital still camera and a camcorder. By uniting a digital still camera and a camcorder, it is possible to provide a product having the functions of both products at a price lower than the price of two separate products. In particular, there is an advantage in that it is possible to provide an economic and simplified product, because it becomes possible to use a single battery, a single tape and a single flash memory in order to use both photography functions. This also avoids having to carry two separate products.

Meanwhile, in the above embodiments, although it is described by way of an example that the battery 60 is installed in the housing 21 and the flash memory 73 is mounted in the main body 10, this is merely an example and their positions can be changed. In this case, it is possible to change the designs and relative sizes of the main body 10 and the housing 21.

Furthermore, the construction as to the hinge section 27 is not limited to the construction described in the above embodiments. Although not shown, it is possible to provide a rotational determination pattern on the housing 21 or the main body 10 in order to allow the stepwise rotation of the housing 21, and a proper frictional force then is applied between the main body 10 and the housing 21 in order to maintain the existing rotation state prior to a rotating force being applied.

It is also possible to sense the positions of the first and second camera sections 23, 25 only by using a non-contact sensor, e.g., a photo-sensor or the like, to allow the control means to determine the sensed signals and select the appropriate photographic mode. The mode sensing means can be embodied in any suitable way.

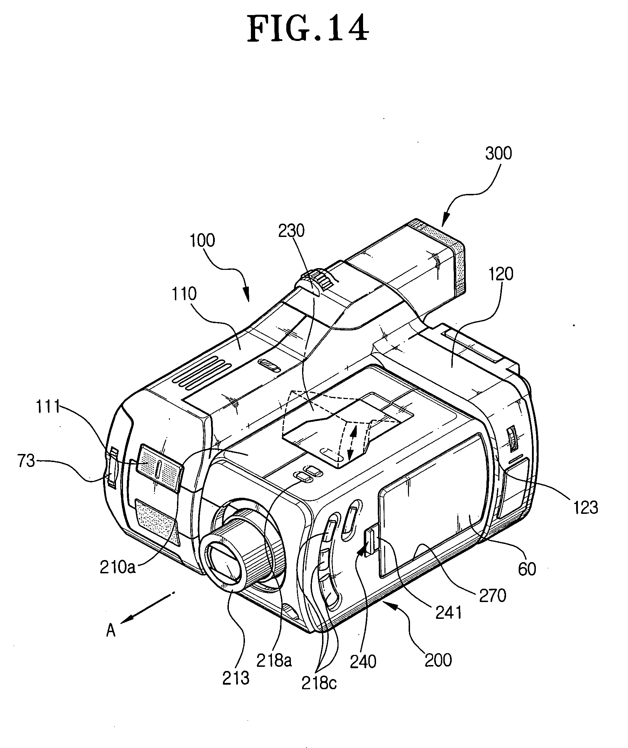

Referring to Figures 14 to 21, camera apparatus according to another embodiment of the present invention includes: a body 100, the inside of which is provided with a moving deck installed with a tape cassette; a camera unit 200 mounted to be rotatable in relation to the main body 10, display means 100, mode sensing means, control means, etc. In this embodiment, the constructions of the mode sensing means 40 and control means 50 are identical to those described with reference to Figures 1 and 2 and detailed description thereof is omitted.

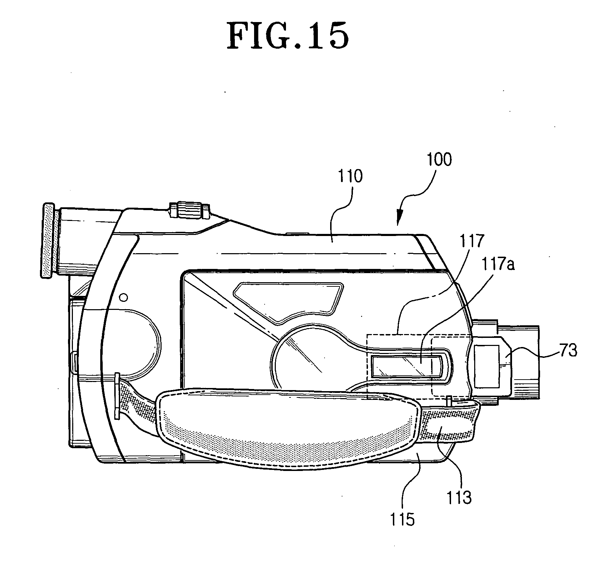

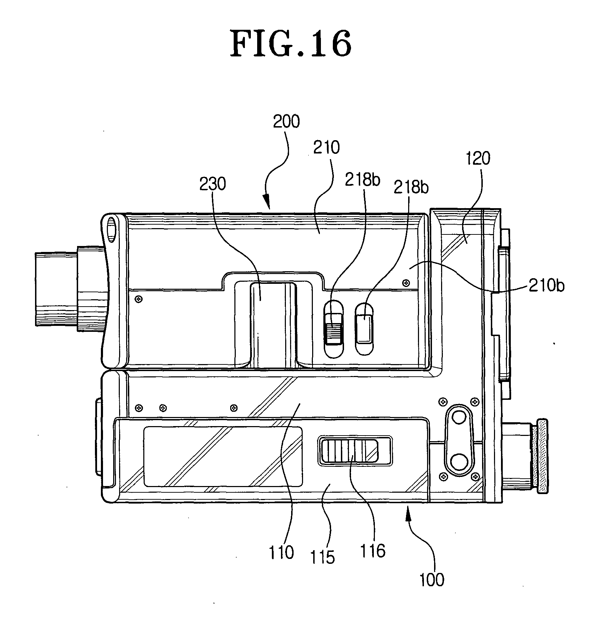

The body 100 comprises a main body 110 provided with the moving deck, and a sub-body 120 projectedly provided on a side of the main-body 110. The rear end of the main-body 110, i.e. the end exposed in the photographing direction A is equipped with a microphone unit 111. As shown in Figure 15, the main body 110 is the part gripped by a hand of the user, whereupon a handle band 113 is provided in the part opposite to the area where the camera unit 200 is connected. In addition, a deck door 115 is capable of being opened downwardly and laterally so that a tape cassette can be inserted through the lower side of the main-body 110. Accordingly, a door open lever is provided on the bottom of the main-body to open the deck door 115, as shown in Figure 16. In addition, the deck door 115 is provided with a flash memory mount section 117, in which a flash memory 73 is installed. The memory mount section 117 has a confirmation window, through which it is possible to confirm the mounting of the flash memory 73 from the outside. The confirmation 117a may be provided by forming an opening or providing a transparent window over the memory mount section 117.

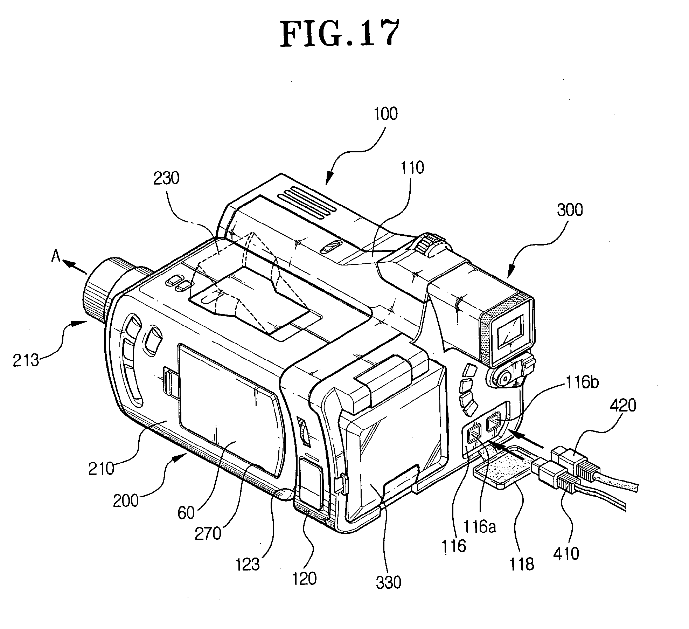

In the front face of the main-body 110, there are provided buttons for activating and controlling various functions of the camera 100. Referring to Figure 17, the front face of the main-body 110 is also provided with an electric power connector section 116a, to which a power supply cable 410 can be connected, and a connector section 116 formed with a signal connection port 116b, to which a signal cable 420 can be connected for transferring signals to an external machine. The connector section 116 is capable of being opened and closed by the cover 118. Therefore, after the cover 118 is opened, the respective cables 410, 420 are connected, as a result of which it becomes possible to supply electric power and to transfer signals.

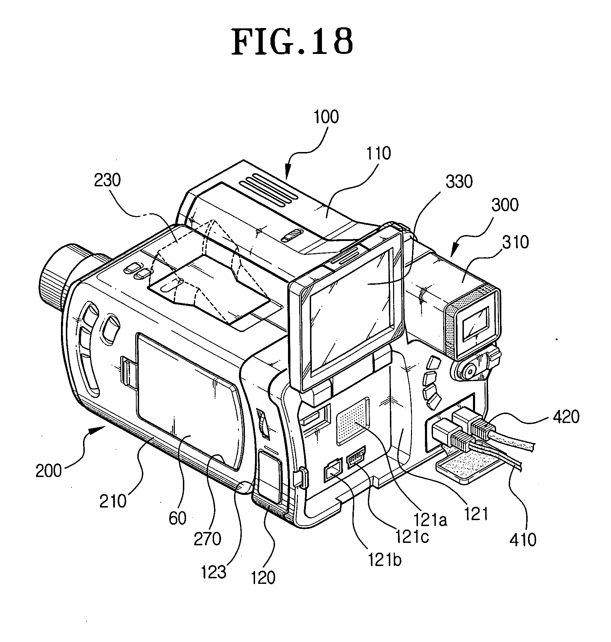

The sub-body 120 is projectedly formed on a side of the main body 110 to form a single body 100 with the main body 110. The sub-body 120 supports a display panel 330. The front face of the sub-body 120 is formed with a panel seating recess 121 within which the panel 330 is received and seated, as shown in Figure 18. The bottom of the panel seating recess 121 is provided with a speaker unit 121 a. In addition, the panel seating recess 121 is provided with signal connection ports 121b, 121c for transferring signals. The rear face of the sub-body 120 is oppositely spaced from one end of the camera unit 200. The camera unit 200 is rotatable. The rear face of the sub-body 120 is formed in a concavely curved surface in order to prevent interference between the camera unit 200 and the sub-body 120 while minimising the space between them.

The camera unit 200 comprises a housing 210, the inside of which is provided with a plurality of camera sections, and a hinge section 230, for rotatably connecting the housing 210 to the body 100. The housing 210 is installed to be rotated at least 180° about the hinge section 230. The inside of the housing 210 is provided with a first camera section 213 used for a digital still camera and a second camera section 215 used for a digital video camera for photographing images including moving images. The pixel count of the second camera section 215 is smaller than that of the first camera section 213. The arrangement and construction of the first and second camera sections 213, 215 are identical to the camera sections 23, 25 described above and thus detailed description thereof is omitted.

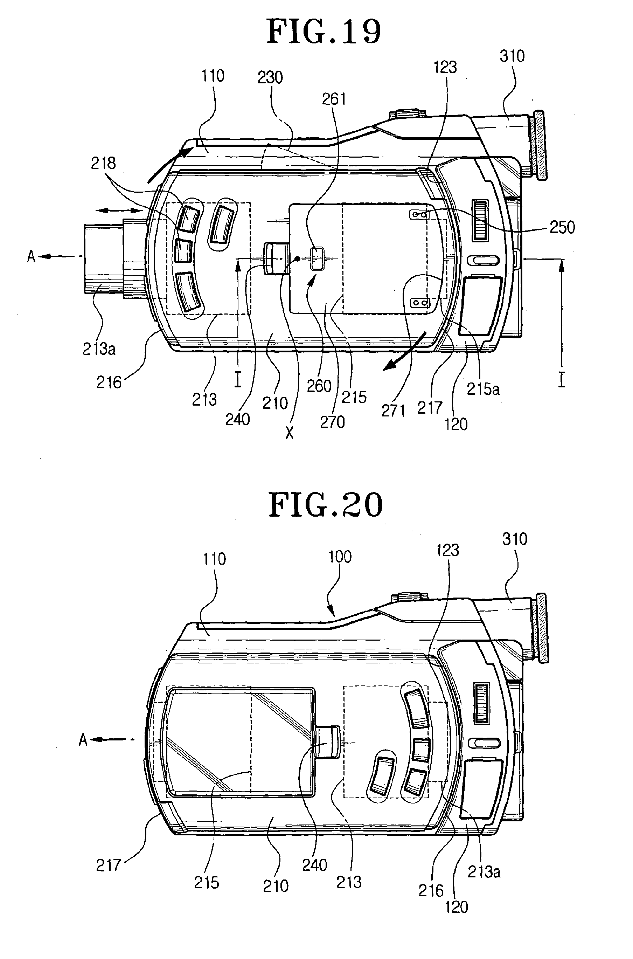

The housing 210 has a substantially cuboid shape. Opposite ends of the housing 210, in which the lenses 213a and 215a of the camera sections 213, 215 are exposed, have convex surfaces 216, 217 curved to correspond to the concave surface 123 of the sub-body 120. The convex surfaces 216, 217 are spaced from the concave surface 123 with a space to avoid interference between them. Preferably, the curved surfaces 216, 217 and 123 have an identical centre of curvature, and their radii of curvature are different from each other. In addition, the centre of curvature of the surfaces 216, 217 and 123 preferably is coincident with the rotational centre X of the housing 210. The state shown in Figure 19 corresponds to the digital photographic mode for picking up still images through the first camera section 213, in which the still images are picked up through the zooming operation performed by the lens 213a extending and retracting. From this state, the housing 210 is rotated 180°, as shown in Figure 20, in order to execute video image capture with the second camera section 215 oriented to the photography direction. Here, the lens 213a is retracted into the inside to the housing 210 in order to avoid interference with the sub-body 209. The operation of the housing is identical to the embodiments described above and detailed description thereof is omitted here.

A flash unit 230 is retractably installed on the top of the housing. In particular, the flash unit 230 is installed to emit light in the photography direction of the first camera section 213. The first camera section 213 may be supported on the housing 210 by a one-touch type switch. Here, the flash unit 230 is installed in such a way that it pops out if the top of the flash unit is pressed once and pops in if the pop of the flash unit is pressed again when it is in the popping-out state.

In addition, a battery mount section 270 for mounting a battery 60 is formed on a side of the housing 210. The battery mount section 270 is concavely formed to have a predetermined height with a shape corresponding to the shape of the battery 60. Therefore, the battery 60 is directly mounted in the battery mount section 270, rather than in the sliding manner of the first embodiment described above. Here, the battery mount unit 270 is provided with a locking/release unit 240 for locking and releasing the battery. The locking/release unit 240 includes a sliding member 241 that is slidably mounted in the housing 210 and pops in and out in the battery mount section. The sliding member 241 is elastically biased by a spring (not shown) in the direction which allows it to be lockingly engaged with a predetermined portion of the battery.

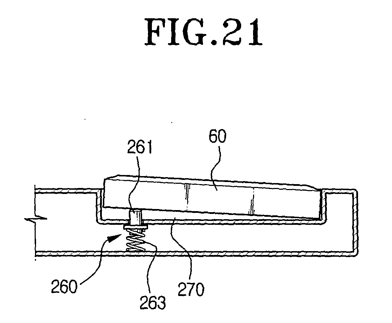

In addition, the bottom of the battery mount section 270 is provided with power terminals 250 and a detaching unit for forcibly and outwardly detaching the released battery. Referring to Figure 21, the detaching unit 260 comprises a compression projection 261 installed in to pop in and out from the bottom of the battery mount section 270, and a spring 263 for elastically and outwardly compressing the compression projection 261. Therefore, the released battery 60 is elastically pushed by the compression projection 261 being forcibly projected and thus the battery 60 is projected from the battery mount section by a predetermined distance, so that the battery 60 can be easily removed.

Here, the power terminals 250 and the locking/release unit 240 are oppositely positioned in the battery mount section 270. If the power terminals 250 are located as far as possible from the locking/release unit 240, the electric connection between the power terminals 250 and the battery 260 can be effectively implemented when the battery is mounted in the battery mount section 270.

Furthermore, the detaching unit 260 is provided in the bottom of the battery mount section 270 to be positioned more adjacent to the locking/release unit 240. That is, the locking/release unit 240 and the detaching unit 60 may be positioned somewhat close to each other so that they in effect exert forces in relation to the battery 60.

The battery mount section 270 has a concavely curved surface 271 having a radius of curvature. The concavely curved surface 271 is formed with a shape corresponding to that of the battery 60 to have a centre of curvature X identical to that of the curved surfaces 216, 217. In addition, the radii of curvature of the curved surfaces become less, from the curved surface 123 being the largest, through the curved surfaces 216, 217 to the concavely curved surface 271, which has the smallest radius.

In addition, the battery mount section 270 is offset from the rotational centre X of the housing 210. Preferably, the battery mount section 270 is offset toward the second camera section 215. This is because the camera section 215 occupies a small space as compared to the second camera section 213 and thus an extra space is reserved in the second camera section 215 side in the housing 210. Therefore, it is possible to design the internal space of the housing 210 so that it is compact while allowing the internal space to be effectively utilised.

Furthermore, the housing 210 is provided with a plurality of first manipulation buttons or input switches 218a for selecting the functions of the first camera section 213, a plurality of second manipulation buttons for manipulating the functions of the second camera section 215 (see Figure 16), and a plurality of third manipulation buttons 218c for common use. The first manipulation buttons 218b are exposedly provided at a position convenient for use in the still camera mode using the first camera section 213, i.e. on the first surface 210a of the housing 210 near where the flash unit 230 is exposed. The second manipulation buttons 218b are provided at a position convenient for use in the moving camera mode using the second camera section 215, that is, the second manipulation buttons 218b are exposedly provided on the second surface 210b of the housing 210 to be upwardly exposed when the second camera section 215 is oriented toward the photographing direction. The third manipulation buttons 218c are installed to be exposed to a side of the housing 210 so that they can be commonly used regardless of the respective operations of the first and second camera sections 213, 215.

The display means 300 comprises a viewfinder 310 mounted on the main-body 210 and a display panel 330 mounted on the sub-body 220. The viewfinder 310 is mounted on the top of the front face to the main-body 210, and displays images picked up by one selected from the camera sections 213, 215 or reproduced images.

The display panel is rotatable about two transverse axes in the sub-body 220. The construction of the display panel 330 is the same as that of the display 33 shown in Figure 1 and detailed description is omitted here.

This embodiment achieves all the above-stated advantages of the first embodiment. In addition, there is an advantage in that a photographer can capture images with a convenient posture because it is possible to photograph while rotating the camera unit and not the main body 100.

While the present invention has been shown and described with reference to the preferred embodiments thereof, the present invention is not limited to such. Variant embodiments will be envisaged by those skilled in the art. The scope of the invention is limited only by the appended claims.

## Claims

1. Camera apparatus comprising:
a main body (10) for receiving a removable tape storage medium;
display means (30); and
a camera unit (20) included with the main body;
**characterised:**
**in that** the camera unit is provided with a plurality of independently driven camera modules (23, 25) having different pixel numbers;
by mode sensing means (40) for sensing a photographic mode corresponding to a selected camera module;
by control means (50) responsive to the mode sensing means for driving the camera module corresponding to the sensed photographic mode; and
**in that** the display means is arranged to display an image photographed by the driven camera module.

2. Apparatus according to claim 1, wherein the camera unit (20) is rotatable in relation to the main body, and the mode sensing means (40) senses the photographic mode from the rotated angle of the camera unit.

3. Apparatus according to claim 2, , wherein each photographic mode corresponds to a predetermined range of rotation of the camera unit.

4. Apparatus according to claim 2 or claim 3, wherein when the camera unit comprises two camera modules (23, 25) disposed at approximately 180° rotation from each other.

5. Apparatus according to any of claims 2 to 4, wherein two camera modules are arranged with opposing photography directions.

6. Apparatus according to any of claims 2 to 5, wherein the camera unit comprises:
a housing (21) containing the camera modules; and
a hinge (27) that rotatably connects the housing to the main body.

7. Apparatus according to claim 6, wherein the hinge comprises:
a first hollow shaft member (27a) rotatably installed in a bore formed in the remainder of the housing; and
a second hollow shaft member (27b) rotatable in relation to the first shaft member and secured in the bore formed in the main body.

8. Apparatus according to any preceding claim, wherein the housing is provided with a flash memory mount (117) in which a flash memory (73)can be mounted.

9. Apparatus according to claim 8, wherein the flash memory mount includes a window (117a) for allowing a mounted state of flash memory to be determined.

10. Apparatus according to any preceding claim, wherein each camera module comprises: a lens (23a, 25a), a charge coupled device (23b, 25b), and a charge coupled device driver (23c, 25c).

11. Apparatus according to any preceding claim, wherein one end or alternatively both ends of the camera unit is/are formed in a convexly curved shape.

12. Apparatus according to claim 11, in which a surface of the main body facing the camera unit is formed in a concavely curved shape corresponding to the curved shape of the camera unit.

13. Apparatus according to clam 12, wherein the curved surface of the camera unit and the curved surface of the body have a substantially identical rotational centre and different radii of curvature.

14. Apparatus according to any preceding claim, wherein the camera unit is provided with a set of input switches (28) for each camera module.

15. Apparatus according to claim 14, wherein the sets of input switches (28) are positioned corresponding to the driving modes of the camera sections.

16. Apparatus according to claim 14 or claim 15, further comprising a further set of input switches (28) for common control of the functions of the camera modules.

17. Apparatus as claimed in any preceding claim, in which the display means includes a display panel (33) capable of rotation around one axis.

18. Apparatus as claimed in any of claims 1 to 16, in which the display means includes a display panel (33) capable of rotation around two axes.

19. Apparatus as claimed in claim 17 or claim 18, in which the display panel (33) is driven independently of a viewfinder (31).

20. Images photographing apparatus comprising:
a body, on which a tape cassette is removably mounted;
a camera unit installed in the body and provided with a plurality of camera sections, wherein the camera sections have pixel numbers and the camera sections are independently driven;
mode sensing means for sensing the photographic mode corresponding to the one selected among the camera sections;
control means for selecting a photographic mode according to a signal transferred from the mode sensing means and for driving a camera unit corresponding to the selected photographic mode; and
display means provided in the body for showing the image photographed by the one selected among the camera sections.

21. The apparatus according to claim 20, wherein the camera unit is installed in the body to be rotatable in relation to the body, and the photographic mode sensed by the mode sensing means is determined according to the rotated angle of the camera unit.

22. The apparatus according to claim 21, wherein when the camera unit rotates, the mode sensing means senses photographic modes corresponding to the camera sections in reference to an angle of 180°.

23. The apparatus according to claim 20, the camera sections comprise:
a first camera section used as a digital still camera for photographing still images; and
a second camera section used as a digital video camera for photographing images including moving images, wherein the second camera has a pixel number lower than that of the first camera section.

24. The apparatus according to claim 23, wherein the first and second camera sections are located in such a way that their photographing directions are opposite to each other.

25. The apparatus according to claim 24, the camera unit is installed in the body to be rotatable over a predetermined angle, and the first and second camera sections are symmetrically positioned in reference to the rotation axis of the camera unit.

26. The apparatus according to claim 25, wherein the first and second camera sections are capable of being driven when they are positioned within a predetermined range of rotated angle of the camera unit.

27. The apparatus according to claim 20, wherein the camera unit comprises:
a housing that receives the camera sections to be oppositely directed on a same line; and
a hinge section that rotatably connects the housing to the body.

28. The apparatus according to claim 21, wherein the hinge section comprises:
a first hollow shaft member rotatably installed in a bore formed in the housing; and
a second hollow shaft member assembled to be rotatable in relation to the first shaft member and secured in the bore formed in the body.

29. The apparatus according to claim 21, wherein the housing is provided with a battery mount section within which the battery is removably mounted.

30. The apparatus according to claim 21, wherein the housing is provided with a flash memory mount section in which a flash memory for storing still images is mounted.

31. The apparatus according to claim 20, wherein the body is provided with a microphone unit for receiving external acoustic signals and a speaker unit for sending out recorded sounds.

32. The apparatus according to claim 20, wherein the mode sensing means comprises a selector switch which turns ON one of the camera sections and turns OFF the other, and the mode sensing means senses the photographic mode corresponding to the camera unit turned ON by the selector switch.

33. The apparatus according to claim 32, wherein when the camera unit rotates in relation to the body, and the selector switch turns ON the camera unit located within the predetermined range of rotated angle of the camera unit and turns OFF the remainder.

34. The apparatus according to claim 20, wherein the display means includes:
a viewfinder provided in the body for showing images photographed by the camera sections; and
a display panel installed to be capable of at least two-axis rotation, wherein the display panel shows images independently of the viewfinder.

35. The apparatus according to claim 23, wherein the first camera section comprises:
a first lens for a digital still camera;
a first CCD for the digital still camera, which converts one or more still images imaged by the first lens into electric signals; and
a first driver controlled by the control means to drive the first CCD.

36. The apparatus according to claim 23 or 35, wherein the second camera section comprises:
a second lens for a digital video camera;
a second CCD for the digital video camera, which converts one or more moving images picked up by the second lens into electric signals; and
a second driver controlled by the control means to drive the second CCD.

37. The apparatus according to claim 20, wherein the camera unit comprises a flash unit for emitting light when one of the camera sections photographs.

38. The apparatus according to claim 27, wherein a flash unit is provided on the top of the housing to be capable of popping in and out.

39. The apparatus according to claim 23, wherein the camera unit comprises a flash unit for emitting light in the direction the first camera section photographs.

40. The apparatus according to claim 20, wherein the body is provided with a flash memory mount section, in which a flash memory for storing data including the still images is removably installed.

41. The apparatus according to claim 40, wherein the flash memory mount section includes a confirming window for confirming whether the flash memory is mounted or not.

42. The apparatus according to claim 27, wherein at least one end of the housing is formed in a convexly curved shape.

43. The apparatus according to claim 27, the corresponding surface of the body facing the camera unit in the OFF state among the camera sections is formed in a concavely curved shape.

44. The apparatus according to claim 20, wherein the top of the housing is provided with a flash unit mount section, in which a flash unit is removably installed.

45. The apparatus according to claim 20, wherein the body comprises:
a main-body provided with a moving deck, in which the tape cassette is mounted; and
a sub-body extended to a side of the main-body and faced to an end of the camera unit.

46. The apparatus according to claim 45, wherein the display means comprises:
a viewfinder provided in the main-body;
a display panel installed in the sub-body to be capable of at least one axis rotation and driven independently of the viewfinder.

47. The apparatus according to claim 46, wherein the sub-body is formed with a panel seat recess within which the display panel is received and seated.

48. The apparatus according to claim 46, wherein the inside of the panel seating recess is provided with a signal contact terminal for signal connection with an external machine.

49. The apparatus according to claim 46, wherein the inside of the panel seating recess is provided with a speaker unit.

50. The apparatus according to claim 44, wherein the opposite ends of the camera unit are formed in a curved shape, and the sub-body is provided with a curved surface curved in a shape corresponding the curved shape of the opposite ends.

51. The apparatus according to claim 27, wherein the camera sections comprise:
a first camera section installed in the housing and used as a digital still camera for photographing still images; and
a second camera section for images including moving images in the direction opposite to the first camera section, wherein the second camera section has a pixel number smaller than that of the first camera section.

52. The apparatus according to claim 51, wherein the housing is provided with a first set of manipulation buttons for manipulating the function of the first camera section, and a second set of manipulation buttons for manipulating the function of the second camera section.

53. The apparatus according to claim 29, wherein the battery mount section is concavely formed on the external surface of the housing and the battery is directly received and seated in the battery mount section.

54. The apparatus according to claim 29, further comprising:
a locking release unit for releasing the locking of the battery mounted in the battery mount section; and
a detaching unit for detaching the battery from the battery mount section by forcibly pushing out the released battery.

55. The apparatus according to claim 54, wherein the detaching unit comprises:
a pushing projection installed in the bottom of the battery mount section to be capable of popping in and out; and
a spring for elastically and outwardly compressing the pushing projection.

56. The apparatus according to claim 54, wherein the bottom of the battery section is provided with a pair of power terminals electrically connected with the battery.

57. The apparatus according to claim 56, wherein the locking release section and the power terminals are spaced each other in the opposite directions in the battery mount section.

58. The apparatus according to claim 57, wherein the detaching unit is provided on the bottom of the battery mount section and positioned more adjacent to the locking release unit than to the power terminals.

59. The apparatus according to claim 29, wherein the battery mount section is concavely formed on the outside of the housing to be offset about the rotational centre of the housing.

60. The apparatus according to claim 29, wherein the battery mount section has at least one concavely curved surface having a radius of curvature.

61. The apparatus according to claim 60, wherein the housing has a curved surface in at least one end thereof formed to have a centre of curvature identical to that of the concavely curved surface of the battery mount section.

62. The apparatus according to claim 61, wherein the centres of curvature of the curved surface of the housing and the battery mount section coincide with the rotational centre of the housing.

63. The apparatus according to claim 23, wherein the camera unit comprises:
a housing for receiving the first and second camera sections to be oppositely oriented with reference to the rotational axis; and
a hinge section for rotatably connecting the housing to the body.

64. The apparatus according to claim 63, wherein the outside of the housing is provided with a battery mount section in which a battery is removably mounted, and wherein the battery mount section is installed to be offset toward the second camera section.

65. The apparatus according to claim 60, wherein the side of the body facing the housing is provided with a curved surface corresponding to the curved surface of the housing and the concavely curved surface of the housing.

66. The apparatus according to clam 65, wherein the curved surface of the housing, the concavely curved surface and the curved surface of the body have an identical rotational centre and different radii of curvature.

67. The apparatus according to claim 52, further comprising: third manipulation buttons, wherein the third manipulation buttons allow common manipulation of the individual functions of the first camera sections and the second camera sections according to the selected mode.

68. The apparatus according to claim 51, wherein the first and second manipulation buttons are installed in the housing in such a way that the first and second manipulation buttons are selectively positioned in predetermined positions in corresponding to the driving modes of the camera sections.

69. The apparatus according to claim 68, wherein the first and second manipulation buttons are mounted on the first and second surfaces of the housing, respectively, in which the first and second surfaces are oppositely positioned.
